# EUROPEAN PATENT SPECIFICATION

(11) **EP 1 453 376 B1**
(45) Date of publication and mention of the grant of the patent: **17.01.2007**
(21) Application number: 02803857.8
(22) Date of filing: 19.11.2002
(51) Int. Cl.: A01M 25/00

(54) **BAIT BOX**
KÖDERBEHÄLTER
BOITE APPAT

(30) Priority: 21.11.2001 GB 0127905
(43) Date of publication of application: 08.09.2004
(73) Proprietor: Killgerm Chemicals Limited, Ossett WF5 9NA (GB)
(72) Inventor: Hoyes, Paul, Grantham, Lincolnshire NG31 7JD (GB); Binns, Nigel Peter, Oakwood, Derby DE21 2XU (GB)
(74) Representative: Stuttard, Garry Philip
(86) International application number: PCT/GB2002/005193
(87) International publication number: WO 2003/045138

(56) References cited:
- US-A- 4 570 377
- US-A- 6 082 042

## Description

The present invention relates to bait boxes, in particular bait boxes for rodents.

Bait boxes for rodents are used widely in many areas where the issue of hygiene is important. For example, they are used in the food industry, whether it be in factories where food production is taking place, or in restaurants or other food outlets where food is stored and prepared. Bait boxes have also been used in the healthcare industry, for example in hospitals, to prevent the risk of ingress of infection by means of rodents in to relatively clean or sterile areas and monitor rodent infestation.

Bait boxes are either set down on, or fixed to, a support surface and are provided with openings of a predetermined size to allow access to the bait by selected rodents. The boxes may be fixed directly to the support surface or by means of a support plate or bracket. The boxes are arranged to hold some form of bait which attracts small rodents to feed in the box. The bait often includes a rodenticide which the rodent ingests and will lead to the death of the rodent, possibly quickly, but usually some time (for example a matter of days) later.

In order for bait boxes to be effective they must be positioned in locations where rodent infestation is most likely to occur, for example near food production, preparation or storage areas. Bait boxes can be positioned on support surfaces such as the frames of conveyor systems or on the floor of a kitchen or a food store. Rodent infestation is monitored on a regular basis in such areas by a hygiene assistant or pest control operative examining the contents of the box to check for signs that the bait has been eaten in any way. In this regard, due to the health risk posed by boxes which have been visited by rodents and bait which has been eaten it is vital that these boxes remain locked and in a fixed position.

In many industrial or commercial establishments where bait boxes are used, several boxes can be required to provide an adequate rodent monitoring network. Due to the nature of these establishments boxes are sometimes positioned in locations which are relatively difficult to reach for a pest control operative to open the box in an adequate manner and view the contents carefully. Moreover, due to the relatively small nature of the boxes they are sometimes difficult to open and pest control operatives may, when faced with many of these boxes to check, not inspect each bait box carefully or even open them at all and simply assume that the contents are intact. However, if the bait inside each box is not carefully checked there exists the possibility that the number of rodent incidents is not monitored properly or that bait boxes are left empty of bait. In this situation, due to the relatively short gestation periods of many rodents, the rodent population can quite quickly get out of hand leading to an explosion of the rodent population which may prove costly and difficult to control.

Furthermore, many bait boxes are simply placed on the ground or on stationary parts of machinery leaving them vulnerable to being knocked or kicked out of position. It is vital that pest control operatives are aware of the position of the boxes in order for them to carry out an effective monitoring regime. Losing boxes is also highly undesirable given the potential for the spread of disease from bait or boxes which have been visited by rodents.

Unfortunately, there have been instances where malicious workers have deliberately tampered with bait boxes by picking them up and throwing them directly into a food production areas or vessels such as vats. This creates a health risk to workers, machinery and food in production which may require expensive cleaning or fumigation processes and can result in machine downtime which has knock-on effects to production and ultimately profits. Therefore, there exists a great need for bait boxes which can be secured at a monitoring location in a tamper-resistant manner.

US-A-4 570 377 discloses a bait box assembly according to the preamble of claim 1.

The present invention provides a bait box assembly comprising a bait box and a base member which can be secured to a support surface, the bait box having a lid which can be moved between a locked and closed position and an unlocked and open position, in which the base member and bait box have interengagable formations which secure the bait box to the base member, and in which the bait box can only be released from the base member when the lid is in the unlocked and open position.

Allowing release of the bait box from the base member only when the lid of the bait box has been moved to an unlocked position prevents accidental release of the bait box from the base member. The fact that the box must be unlocked and opened before it can be separated from its mounting makes the box more tamper resistant. Moreover, positive locking means for the lid prevents unwarranted access to the box and stops miscreants tampering with it and detaching the bait box from its mounting means.

Preferably, the interengageable formations comprise a plurality of projections on the base member which are received by corresponding apertures in the base compartment.

Conveniently, at least one of the projections can be displaced relative to the base member.

In preferred embodiments, the bait box can be released from the base member by displacing the at least one projection relative to the base member, moving the bait box relative to the base member, and separating the bait box and base member.

The base member may be a planar element which can be secured to a support surface. Most preferably, the base member is substantially L-shaped.

An embodiment of the present invention will now be illustrated, by way of example only, in the following figures in which:
Figure 1 shows a plan view of a bait box of the present invention in an open position;

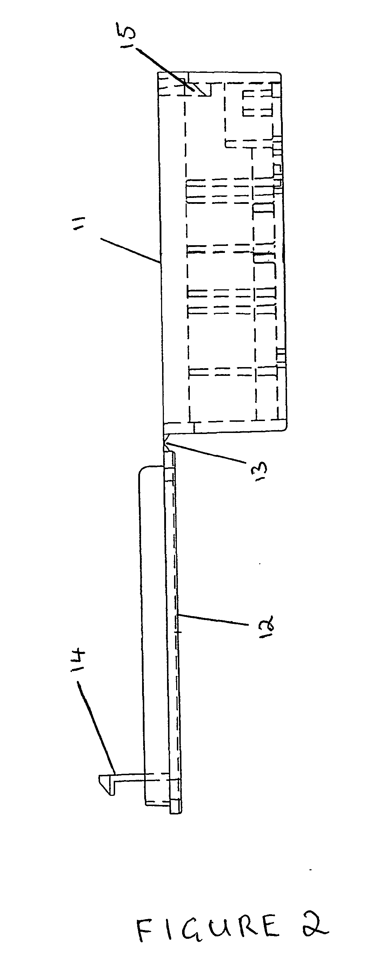

Figure 2 shows a front elevation of the bait box shown in Figure 1 as viewed in the direction of arrow A;
Figure 3 shows an inverted side elevation of the lid of the bait box as shown in Figure 1 as viewed in the direction of arrow B;

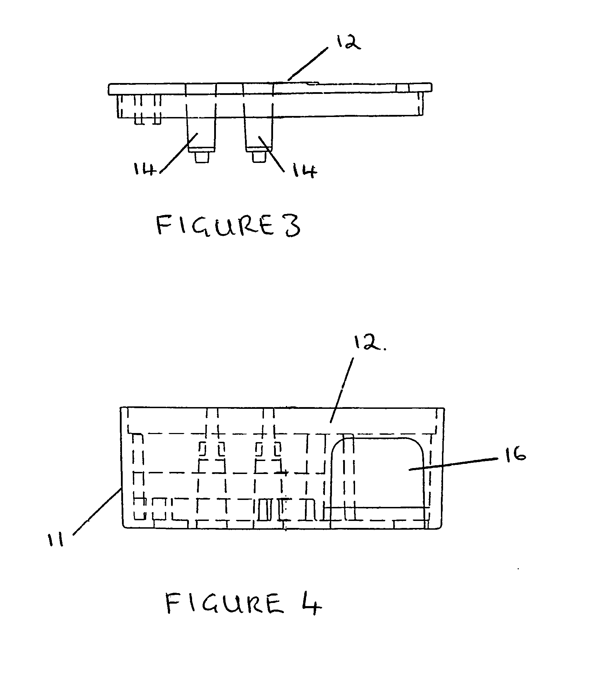

Figure 4 shows a side elevation of the bait box shown in Figure 1 as viewed in the direction of arrow C, with the box in a closed configuration;
Figure 5 shows a plan view of a base plate of the present invention;
Figure 6 shows a front elevation of the base plate as shown in Figure 5 as viewed in the direction of arrow D; and
Figure 7 shows a side elevation of the base plate as shown in Figure 5 as viewed in the direction of arrow E.

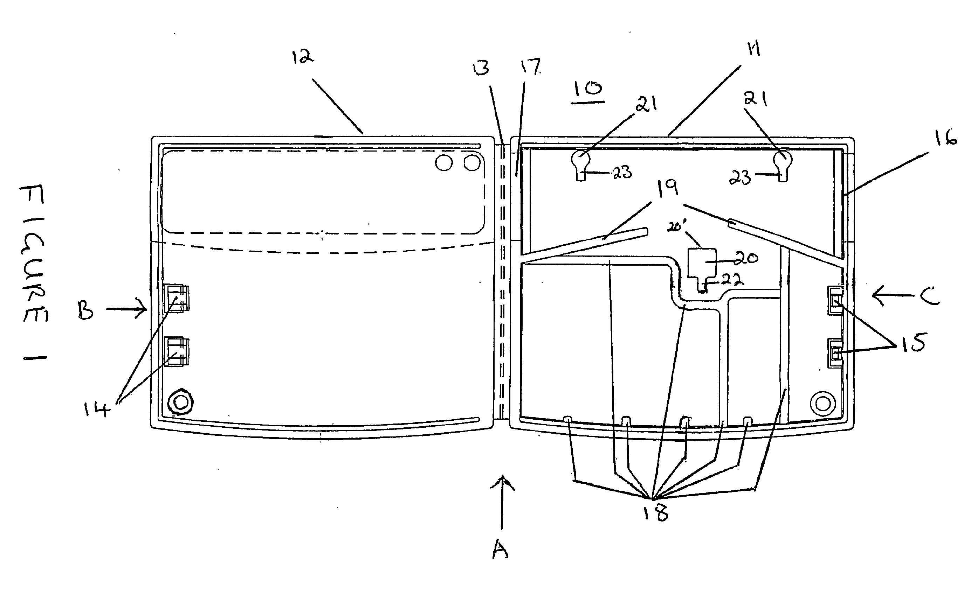

The bait box 10 shown in Figure 1 consists of a base compartment 11 and a lid 12 hinged along one edge 13 of the compartment. The lid 11 has two locking projections 14 which have hooks at their ends for engaging corresponding locking receptacles 15 on the base compartment 12 to lock locking the lid and compartment together. A key (not shown) can be used to move the projections 14 out of locking engagement with the locking receptacles 15.

In use, small rodents enter the locked bait box through entrance holes 16, 17 in the sides of the base compartment. The rodents are attracted into the bait box by blocks of bait of variable sizes which sit in bait receiving frames 18. The bait not shown is normally laced with a rodenticide which is ingested by the rodent. In most cases the rodenticide is arranged to kill the rodent up to several days after ingestion/exposure therefore the death of the animal usually occurs outside the bait box. Asymmetric baffles 19 define a gap which allows the rodent to pass into the feeding area but prevent people, particularly children, from gaining access to the bait by poking fingers or elongate instruments in to the base compartment through the entrance holes 16, 17.

The bait box 10 is mounted onto an L-shaped base plate 30 which consists of a base 31 which receives the base of the bait box 10 and a side flange 32 which abuts against a side of the bait box. The base plate 30 can be fixed to a support surface not shown by means of a slot 33 in the side flange 32 or a screw not shown through an aperture 34. Alternatively, any suitable fixing method such as an adhesive may be used to secure the base plate 30 to a support surface.

The base plate 30 and bait box 10 can be locked together by means of a series of locating studs or pins 36, 36' on the base plate 30, which fit through a series of locating apertures 20, 21 on the base of the bait box, and a press stud or tab 35 having a protrusion 38 which can be moved into and out of engagement with an edge 20' of locating aperture 20.

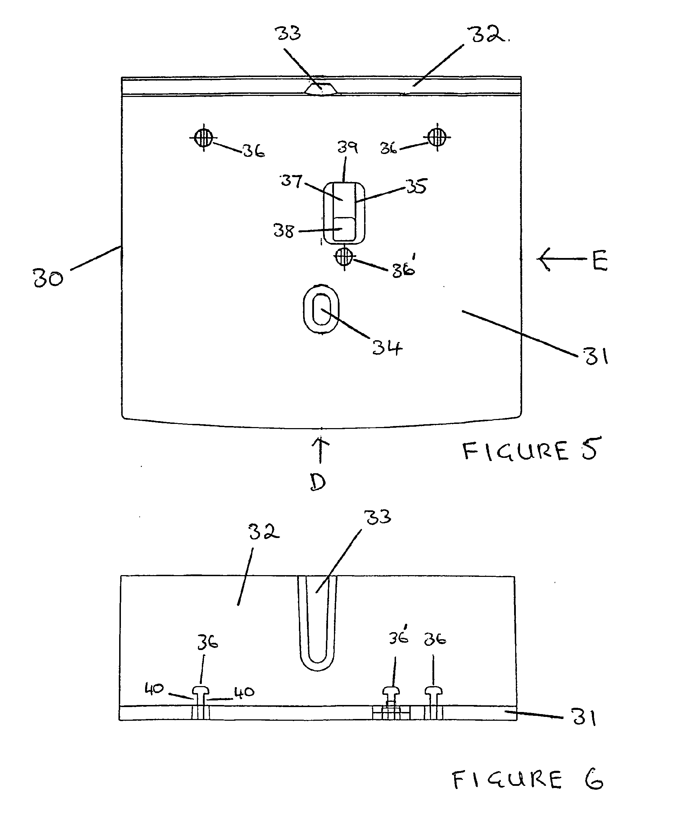

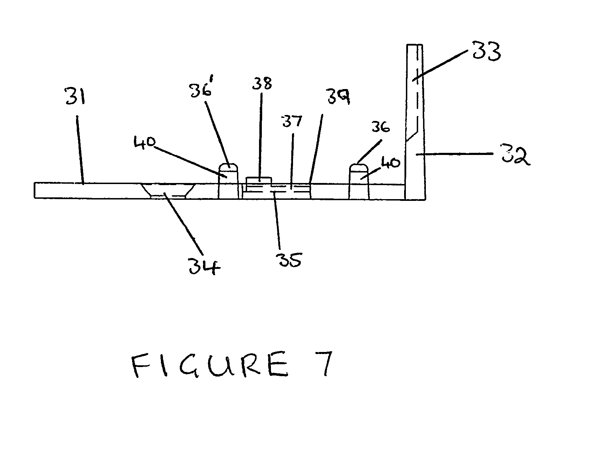

To secure the bait box 10 to the base plate 30 the bait box is positioned on the base plate in such a manner that two pins 36 protrude through a pair of generally circular apertures 21 and another pin 36' protrudes through a generally square aperture 20. As best shown in Figures 5 and 7, a tab 35 is connected to the base 31 of the base plate 30 along one edge 39 of the tab 35. The body 37 of the tab 35 is thinner in comparison with the base 31 and upon depression of the protrusion 38 is flexible enough to be bent downwards. When the protrusion 38 is depressed, the bait box 10 may be translated with respect to the base 31, bringing the flats 40 on the sides of the studs 36, 36' into engagement with the flats 23 of apertures 21 and flats 22 of aperture 20. Upon release of the tab 35, the protrusion 38 prevents movement of the bait box 10 with respect to the base 31.

To release the bait box 10 from the base plate 30, an operator must use a key not shown to bring the locking projections 14 out of locking engagement with the locking receptacles 15. The lid 12 can then be opened and the operator can access the tab 35. By depressing the protrusion 38 towards the base 31 of the base plate 30, the protrusion 38 is moved beneath an edge 20' of aperture 20 and out of engagement with that edge of aperture 20, The bait box can then be removed from the base plate 30 by simply sliding the bait box with respect to the fixed base plate bringing the flats of the studs 36, 36' out of engagement with the flats 23 of the generally circular apertures 21 and the flats 22 of the generally square aperture 20. The box can then be lifted away from the base plate for closer inspection or to refill bait.

## Claims

1. A bait box assembly comprising a bait box (10) and a lid (12) which can be moved between a locked and closed position and an unlocked and open position, **characterized in that** the assembly further comprises a base member (30) which can be secured to a support surface, in which the base member and bait box have interengagable formations (36,36',20,21) which secure the bait box to the base member, and in which the bait box can only be released from the base member when the lid is in the unlocked and open position.

2. An assembly as claimed in claim 1, in which the interengageable formations comprise a plurality of projections on one of the base member and the bait box, and a plurality of corresponding apertures in the other of the base member and the bait box, in which the projections can be received.

3. An assembly as claimed in claim 1, in which at least one of the apertures has a keyhole shape in which the transverse dimension of the aperture is greater at one end that at its opposite other end, and in which the corresponding projection has a head portion and a narrowed neck portion between the head portion and the bottom of the projection, in which the transverse dimension of the aperture at the said opposite other end is greater than the transverse dimension of the neck portion and less than the transverse dimension of the head portion.

4. An assembly as claimed in claim 3, which includes a locking projection which, when received in its corresponding aperture, prevents the bait box and the base plate from being slid relative to one another, so that the narrow neck projection is retained in the said opposite other end of the keyhole shape aperture.

5. An assembly as claimed in claim 3, in which there are at least three projections, of which the locking projection is located approximately midway between two opposite edges of the box.

6. An assembly as claimed in claim 2, in which the or each projection is provided on the base plate and the corresponding apertures are provided in the base of the bait box.

7. An assembly as claimed in any one of the preceding claims, in which the base member is substantially L-shaped, in which one limb of the "L" is arranged to engage the base of the bait box and the other limb of the "L" is arranged to engage a side wall of the bait box.

## Patentansprüche

1. Baugruppe einer Köderbox, umfassend eine Köderbox (10) und einen Deckel (12), der zwischen einer verriegelten und geschlossenen Position und einer entriegelten und offenen Position bewegt werden kann, **dadurch gekennzeichnet, dass** die Baugruppe weiter ein Grundelement (30) umfasst, welches an einer Stützfläche gesichert werden kann, wobei das Grundelement und die Köderbox ineinandergreifbare Gebilde (36, 36', 20, 21) haben, die die Köderbox an dem Grundelement sichern, und wobei die Köderbox nur von dem Grundelement gelöst werden kann, wenn der Deckel in entriegelter und offener Position ist.

2. Baugruppe nach Anspruch 1, wobei die ineinandergreifbaren Gebilde eine Vielzahl Auskragungen auf dem Grundelement oder der Köderbox einerseits aufweisen, und andererseits eine Vielzahl korrespondierender Öffnungen auf dem Grundelement bzw. der Köderbox aufweisen, in welche die Auskragungen aufgenommen werden können.

3. Baugruppe nach Anspruch 1, wobei mindestens eine der Öffnungen die Form eines Schlüssellochs hat, wobei die Querausdehnung der Öffnung an dem einen Ende größer ist, als am gegenüber liegenden anderen Ende, und wobei die ihr entsprechende Auskragung einen Kopfabschnitt hat und einen verengten Halsabschnitt zwischen dem Kopfabschnitt und dem unteren Teil der Auskragung, wobei die Querausdehnung der Öffnung an dem gegenüberliegenden anderen Ende größer ist, als die Querausdehnung des Halsabschnitts, und kleiner als die Querausdehnung des Kopfabschnitts.

4. Baugruppe nach Anspruch 3, welche eine Auskragung zur Absperrung beinhaltet, die, wenn sie in ihre entsprechende Öffnung aufgenommen ist, die Köderbox und die Grundplatte davor bewahrt, sich gegeneinander zu verschieben, so dass die Auskragung mit verengten Hals in dem gegenüberliegenden anderen Ende der schlüssellochförmigen Öffnung fixiert ist.

5. Baugruppe nach Anspruch 3, wobei es mindestens drei Auskragungen gibt, bei denen die Auskragung zur Absperrung ungefähr in der Mitte zwischen zwei gegenüberliegenden Ecken der Box angeordnet ist.

6. Baugruppe nach Anspruch 2, wobei die oder jede Auskragung an der Grundplatte vorgesehen ist und die entsprechenden Öffnungen am Boden der Köderbox vorgesehen sind.

7. Baugruppe nach einem der vorherigen Ansprüche, wobei das Grundelement im Wesentlichen L-förmigist, wobei ein Glied des "L" so angeordnet ist, dass es an den Boden der Köderbox anliegt und das andere Glied des "L" so angeordnet ist, dass es an einer Seitenwand der Köderbox anliegt.

## Revendications

1. Ensemble de boîte appât comprenant une boîte appât (10) et un couvercle (12) qui peut être déplacé entre une position verrouillée et fermée et une position déverrouillée et ouverte, **caractérisé en ce que** l'ensemble comprend en outre un élément de base (30) qui peut être fermement fixé à une surface de support, dans lequel l'élément de base et la boîte appât sont munis de formations pouvant être mutuellement mises en prise (36, 36', 20, 21) qui fixent fermement la boîte appât à l'élément de base et dans lequel la boîte appât ne peut être libérée de l'élément de base que lorsque le couvercle est en position déverrouillée et ouverte.

2. Ensemble selon la revendication 1, dans lequel les formations pouvant être mutuellement mises en prise comprennent une pluralité de saillies sur l'un des éléments parmi l'élément de base et la boîte appât et une pluralité d'ouvertures correspondantes sur l'autre des éléments parmi l'élément de base et la boîte appât, dans lesquelles les saillies peuvent être reçues.

3. Ensemble selon la revendication 1, dans lequel au moins une des ouvertures se présente sous la forme d'une entrée de clé dans laquelle la dimension transversale de l'ouverture est plus grande au niveau d'une extrémité par rapport à son autre extrémité opposée et dans lequel la saillie correspondante présente une partie de tête et une partie de col rétrécie entre la partie de tête et la partie inférieure de la saillie, dans laquelle la dimension transversale de l'ouverture au niveau de ladite autre extrémité opposée est supérieure à la dimension transversale de la partie de col et inférieure à la dimension transversale de la partie de tête.

4. Ensemble selon la revendication 3, qui comprend une saillie de verrouillage qui, lorsqu'elle est reçue dans son ouverture correspondante, empêche la boîte appât et la plaque de base de glisser l'une par rapport à l'autre, de sorte que la saillie de col rétrécie est retenue dans ladite autre extrémité opposée de l'ouverture se présentant sous la forme d'une entrée de clé.

5. Ensemble selon la revendication 3, dans lequel il y a au moins trois saillies, dont la saillie de verrouillage est située approximativement à mi-chemin entre deux bords opposés de la boîte.

6. Ensemble selon la revendication 2, dans lequel la ou chaque saillie est disposée sur la plaque de base et les ouvertures correspondantes sont disposées sur la base de la boîte appât.

7. Ensemble selon l'une quelconque des revendications précédentes, dans lequel l'élément de base se présente sensiblement sous la forme d'un L, dans lequel un bras du « L » est disposé de manière à mettre en prise la base de la boîte appât et l'autre bras du « L » est disposé de manière à mettre en prise une paroi latérale de la boîte appât.
